# EUROPEAN PATENT APPLICATION

(11) **EP 4 538 525 A1**
(43) Date of publication of application: **16.04.2025**
(21) Application number: 23203173.2
(22) Date of filing: 12.10.2023
(51) Int. Cl.: F03D 7/02, F03D 7/04

(54) **METHOD AND SYSTEM TO OPTIMIZE THE STABILITY OF THE POWER OUTPUT OF A FLEET OF WIND TURBINES**

(71) Applicant: Parkwind NV, 3000 Leuven (BE)
(72) Inventor: VAN VALCKENBORGH, Jef, 8000 Brugge (BE)
(74) Representative: IP HILLS NV

(57) **Abstract**

The present invention generally relates to a method and a system to optimize the stability of the power output of a wind farm or fleet of wind turbines. Tower oscillations cause a cyclic instability of the aggregated power output of a group of wind turbines. The method analyses the oscillations for each wind turbine and determines the setpoints for tower damping for each wind turbine to reduce the aggregated power output variations.

## Description

### Field of the Invention

The present invention generally relates to systems and methods to control and optimize wind farms or fleets of wind turbines. It therefore generally relates to systems for generating electrical power from wind energy.

### Background of the Invention

The dynamic behaviour of wind turbine support structures or towers is a complex interplay between mechanical, aerodynamic, and environmental forces. Wind turbine support structures are herein considered as the complete substructure supporting the nacelle and the rotor. The substructure comprises therefore the foundation and shaft or wind turbine tower, which is the tubular steel bolted on top of a transition piece. Wind turbine support structures and towers are subjected to a range of loading conditions, including wind-induced forces, sea-wave induced forces, gravitational forces, and rotor-induced vibrations. Understanding the structural dynamics is crucial for assessing the wind turbine's stability, fatigue life, and overall performance.

Wind turbine support structures can be modelled as multi-degree-of-freedom systems, where each degree of freedom represents a mode of vibration. These modes correspond to different shapes in which the wind turbine oscillates, often termed "bending," "torsion," and "axial" modes. The structural response of the wind turbine to external forces is influenced by the wind turbine support structures' natural frequencies and mode shapes. The interaction between these modes can result in complex dynamic behaviour, including resonance and mode coupling effects.

The natural frequencies of a wind turbine support structure represent the frequencies at which the wind turbine can vibrate without a continuous external excitation. These frequencies are mainly determined by the wind turbine support structure's geometry and weight, the weight of the nacelle, material properties, and boundary conditions. The support structure mode shapes illustrate how the wind turbine support structure deforms during vibration at a specific natural frequency. For instance, in the bending mode, the wind turbine support structure primarily flexes in one direction, while in the torsional mode, it twists around its axis.

Damping mechanisms play a crucial role in mitigating excessive vibrations and ensuring the wind turbine's stability. Damping dissipates the energy associated with vibrations, reducing the amplitude of oscillations over time. In wind turbines, damping can arise from various sources, including material damping, aerodynamic damping, soil damping and active or semi-active or passive damping.

Material damping is a result of energy loss due to internal friction within the wind turbine's materials. This form of damping is influenced by material properties, such as stiffness and damping coefficients. Aerodynamic damping arises from the interaction between the wind turbine's motion and the surrounding airflow. As the wind turbine support structure oscillates, it generates aerodynamic forces that oppose the motion, leading to energy dissipation. Soil damping, prevalent in wind turbines with a foundation embedded in the ground, involves energy absorption by the soil during tower oscillations. Active or semi-active damping involves active control methods that involve real-time monitoring and adjustment of the wind turbine's operation to counteract oscillations.

Active control systems use sensors to detect wind turbine support structure vibrations and adjust various wind turbine generator parameters, such as blade pitch, rotor speed, and generator torque. By continuously adapting the wind turbine generator's operating conditions, active control can suppress resonant vibrations and enhance the wind turbine's stability.

The presence and magnitude of damping have significant implications for the wind turbine's response to cyclic forces. Inadequate damping can lead to resonant conditions, where vibrations are amplified, potentially causing fatigue damage and reduced structural integrity.

Real-time monitoring of wind turbine support structure vibrations using sensors and data analysis techniques is crucial for implementing effective mitigation strategies. Continuous monitoring enables early detection of abnormal vibration patterns and allows for prompt adjustments to the wind turbine generator's operation. Adaptive control systems use the gathered data to dynamically modify the wind turbine generator's parameters, optimizing its behaviour to minimize vibrations and enhance stability.

Tower oscillations or wind turbine support structure oscillations induced by cyclic forces can have a profound impact on the structural integrity and longevity of wind turbines. Fatigue is a primary concern, as cyclic loading can lead to the accumulation of microscopic cracks and damage within the wind turbine support structure's materials over time. The repetitive nature of tower oscillations exacerbates this process, potentially leading to premature failures, reduced load-carrying capacity, and increased maintenance costs. Understanding the relationship between cyclic forces, wind turbine support structure vibrations, and fatigue is essential for designing wind turbines that can withstand long-term operation in various wind conditions. It is estimated that mitigating the causes of this type of fatigue lengthens the operational lifetime of an offshore wind turbine significantly. Today, metal fatigue is monitored by applying measuring strips to the most critical areas of the wind turbine support structure.

Tower oscillations not only affect the structural integrity of wind turbines but also impact their power output variability. As the tower or wind turbine support structure oscillates, the airspeed applied to the rotor and the generator changes, leading to fluctuations in torque and power generation. These variations in power output can strain grid stability and necessitate complex control strategies to maintain consistent power supply. Additionally, the dynamic response of tower oscillations can lead to unsteady blade aerodynamics, further influencing power generation performance.

Especially when mitigations are applied to counteract the tower oscillations that are based on controlling generator torque, the effects on cyclic power variations are further enhanced. Generally a trade-off between cyclic power variations and the longevity of the wind turbine has to be made, at the level of an individual wind turbine.

It is an object of this invention to provide a method that reduces the power instabilities caused by cyclic tower oscillations, while at the same time allowing the application of tower damping to a wind turbine with the purpose to reduce the effects of metal fatigue.

### Summary of the Invention

The present invention provides a method for reducing cyclic power variations of a fleet of wind turbines, as set out in Claim 1. In the method of the invention, said fleet of wind turbines comprises a plurality of wind turbines each equipped with an active tower damping system, ATD, to compensate tower oscillations and of which a damping factor of the ATD is adjusted according to a setpoint; the method comprising the steps of measuring the tower oscillations, and, calculating and updating the setpoints of the respective wind turbines such that aggregated power variations of the wind turbines in the total power output are reduced according to differences in phase between the measured tower oscillations.

The invention also provides a system for reducing cyclic power variations of a fleet of wind turbines, as set out in Claim 10. The invention provides a system, wherein said fleet of wind turbines comprises a plurality of wind turbines each equipped with an active tower damping system, ATD, to compensate tower oscillations and of which a damping factor of the ATD is adjusted according to a setpoint, comprising a means for measuring said tower oscillations, a module for calculating the setpoints of the respective wind turbines such that aggregated power variations of the wind turbines in the total power output are minimized, and an interface for updating setpoints that determine said damping factors of said wind turbines.

It is widely recognized that tower oscillations are an important cause of cyclic power variations of the produced power by a wind turbine. These power variations are an undesirable effect which occur when a tower or wind turbine support structure oscillates when it is subjected to the forces of nature. Low frequency forces induced by the wind or wave action (in case that the wind turbine is installed at sea) cause the tower to oscillate at frequencies close to one of its eigenfrequencies.

The low frequency oscillations impact the torque exerted on the rotor of the wind turbine. In case of side-to-side oscillations, which are oscillations in perpendicular to the rotor axis, the rotor will experience fluctuating forces, causing changes in torque exerted on the wind turbine. This causes the wind turbine to generate fluctuations in the power output.

Other phenomena with an impact on the cyclic power variations may occur when a variety of forces is applied from different directions on the rotor blades of the wind turbine, such as for instance rotor imbalance. Wind turbine rotors are designed to rotate smoothly around a central axis. If the wind turbine support structure sways significantly from side to side due to factors such as gusty winds or other external forces, it can create an imbalance in the rotor system. This imbalance can cause uneven loading on the rotor, leading to variations in rotation speed.

Another effect having an impact on cyclic power variations is for instance yaw misalignment. Wind turbines are equipped with yaw systems that enable them to face into the wind for optimal energy capture. Tower oscillations can cause yaw misalignment, where the rotor's direction deviates from the optimal wind direction. This misalignment can result in decreased efficiency and changes in rotor speed as the rotor experiences varying wind speeds and angles.

A fleet of wind turbines, also known as a wind farm or wind power plant, is a group of wind turbines in the same location used to produce electricity. The power produced by the wind farm is the aggregated electrical power produced by all wind turbines. Wind farms vary in size from a small number of turbines to several hundred wind turbines covering an extensive area. Wind farms can be either onshore or offshore.

Installing wind turbines as a fleet offers several advantages compared to deploying individual wind turbines in isolation. Aside from the economies of scale for installing the wind turbines as a fleet, the fleet approach offers a more efficient land use, provide a better grid integration and more importantly a reduced variability in the power production. Wind farm output tends to be less variable than that of individual wind turbines because the combined output from multiple wind turbines smooths out fluctuations in wind speed. This can make wind power more predictable and reliable.

In the context of this invention, the wind turbines are installed as a fleet and have to be equipped with some sort of active tower damping mechanism or ATD mechanism. This type of systems are well known and are implemented in wind turbines to reduce the tower oscillations as explained above. Each type of ATD mechanism intends to damp at least one component of the oscillation actively, and thus may operate in a certain direction or may operate on a certain mode of vibration of a tower. In the context of this invention, the ATD system is of the active type, allowing its damping characteristics to be varied. The damping characteristics are controlled by setting a setpoint that defines the damping force of the ATD system. The setpoint is therefore set at the level of each wind turbine, the setpoint determines the damping force or the level of damping effect that needs to be achieved by the ATD. As an example of such damping effect to be achieved , a maximum amplitude of the resulting tower oscillation (after damping) could be given.

An example of an active tower damping mechanism is called active mass damping, wherein a control algorithm can adjust the damping force or damping factor in real-time, allowing for precise tuning of the damping effect based on the tower's behaviour and external conditions. The damping factor determines the amount of damping that is applied to a tower. Active mass dampers use sensors to detect tower vibrations and actuators to actively control the motion of the damping mass. The damping factor can be determined by adjusting a setpoint which is a steerable parameter that controls the amount of damping applied to the tower.

Another technique can be used with permanent magnet generators where the torque applied to the rotor can be influenced by controlling, i.e. for instance by limiting, the invertor current. Since the torque that is exerted on the rotor is directly related to the current flowing through a permanent magnet generator, limiting the current can be used to actively damp the side-to-side movements of the tower.

Another type of active tower damping, or ATD, is based on changes of the pitch blade settings. Changing the pitch of the blades has an impact on the aerodynamic properties of the rotor and may also be used as an ATD method.

It is important to note that generators are designed to handle specific loads and voltage ranges, and exceeding these limits can lead to mechanical stress, inefficiency, or even damage to the generator. The setpoints are therefore limited to specific operating ranges.

It has to be observed that when ATD mechanisms are used, a compromise has to be found between the negative lifecycle effects of an undamped system, and the increased power instability effects of damped system.

The method of the invention measures the oscillations of all wind turbine support structures of the fleet, and thereby measures the frequency, amplitude as well as the phase of the oscillations. Different direct measurement methods are typically sensor based, using for instance accelerometers or gyroscopes that are positioned in or on the tower where the largest oscillation amplitudes (and therefore largest measurement signals) are to be expected. The oscillations are preferably measured in particular in the directions on which the ATD systems can act. The different damping systems are typically directional, meaning that the damping force counteracting the oscillations often work in a specific direction only.

Indirect measurement methods may be considered as well; cyclic power variations in the produced active power of the wind turbine are indicative of tower oscillations and may therefore be used measure the amplitude, frequency and phase of the oscillations.

As a next step of the method of the invention, new setpoints are calculated based on the measured tower oscillation data. The tower oscillation data consist of different oscillation parameters: an oscillation is characterized by its phase, amplitude and frequency. These different oscillation parameter data are part of the measured tower oscillation data, and are the basis or input for the calculation of the new setpoints.

The calculation applied in the invention may for instance analyse the oscillation parameter data of all involved wind turbines and identify wind turbines of which some or all of the oscillation parameters show a correspondence to each other. These correspondences then may be acted upon by altering the respective damping factors of the wind turbines showing these correspondences, such that an impact on aggregated cyclic power variation of the fleet is obtained. After the analysis that leads to identification of wind turbines showing a correspondence between oscillation parameter data, new setpoints are calculated for these wind turbines which, when applied to the wind turbines, reduce the aggregated power variations of the produced power.

These correspondences between oscillation parameters may be one or more of the following:
- differences or equivalence of frequencies
- differences or equivalence of amplitudes
- differences or equivalence of phases.

The calculation of the new setpoints of the involved wind turbines may take all of the above oscillation parameter data into consideration; it may be envisaged that the setpoints are only altered for a set of oscillating wind turbines that are out-of-phase to each other. Or alternatively, that only wind turbines showing the same oscillating amplitude are updated with a new setpoint.

To illustrate a simple case; in a case that two wind turbines oscillate at similar frequencies, but in opposite phase to each other, the negative effect on the power output stability of the individual tower oscillations may be partially or fully cancelled out. Optimizing this cancelling effect by actively changing the damping on one or both wind turbines to make sure that the aggregated amplitude of cyclic power variations offset each other, allows advanced optimisation of the power output stability of the two wind turbines, and thus of the fleet. The above effect can be achieved by increasing the setpoints for wind turbines having out-of-phase oscillations.

While the analysis of the oscillation parameters may lead to identification of correspondences that may be immediately apparent, such as for instance the identification of a number of wind turbines showing the same oscillation frequencies, other correspondences may be less apparent but may be found using algorithms or deep learning techniques.

The calculation of the invention, therefore, may comprise deep learning techniques that may be based on simulated fleet data for the training of a deep learning model. The calculation results that determine the new setpoints are obtained by feeding the measured oscillation parameter data into the trained neural network, and may then lead to a complete optimisation of the setpoints of all the wind turbines.

As a final step of the method, the newly calculated setpoints or optimized setpoints of the wind turbine are updated. Updating a setpoint of a wind turbine means that the active tower damping system of the wind turbine receives a new parameter value that influences the damping factor. The damping factor determines the amount of damping or damping force that is applied. The transmission of the parameter value is performed through a signal (digital, encoded, analogue) to the active tower damper control system of the wind turbine.

The invention is thus advantageous in that the individual contributions to the instability of the power output of each wind turbine may be reduced or even cancelled out, and moreover that the power output stability can be optimized of a fleet of wind turbines. The invention is therefore also advantageous in that it allows a much stabler aggregated power output on fleet level.

A further advantage is that in case that the active damping principle is based on electric torque control of the generator, the damping induced contribution to the instability of the power output may be minimized. The damping factors of a set of wind turbines oscillating out of phase of each other may be chosen to reduce the negative lifecycle effect of the oscillations to a minimum without having to compromise on the power instability caused by the damping method itself. Even when the active damping method causes large instabilities on the power output (by operating the damping at a setpoint that is close to an allowable maximum), these effects of the active damping method on the power output instability will be cancelled out thanks to the opposite phase of the induced instabilities.

Specific examples and preferred embodiments are set out in the dependent claims.

Further advantages and embodiments of the present invention will become apparent from the following description and drawings

### Brief Description of the Drawings

Fig. 1 illustrates a wind turbine and its components.
Fig. 2 illustrates an oscillating wind turbine.
Fig. 3 shows a birds eye view of a wind turbine installed at sea.
Fig. 4 shows a birds eye view of a fleet of wind turbines.
Fig. 5 show a schematic overview of the system of the invention.
Fig. 6 shows an example embodiment of a suitable computing system for performing one or several steps in embodiments of the invention.

### Detailed Description of Embodiment(s)

In a first and preferred embodiment of this invention, a fleet of wind turbines 200 is equipped with an SSTD system that is based on electronic torque control of the generator. The damping factors for all individual wind turbines are adjustable by means of individual setpoints that determine for instance the damping factor or the desired maximal oscillation amplitude after damping. The setpoint determines the power applied to achieve the damping effect, and therefore also determines the level of power instability caused by the damping effect itself. In case that the damping is adjusted on-the-fly and synchronized with the oscillation frequency to achieve maximal effect, the power instability will exhibit cyclic characteristics.

In this first embodiment, the fleet of wind turbines 200 is equipped with ATD systems that are capable of adjusting a damping factor that is determined by a setpoint. Each wind turbine has a means for measuring or determining the oscillations of the wind turbine support structures or towers 180, and may be a sensor system, based on an accelerometer or gyroscope, or may be an indirect measurement system.

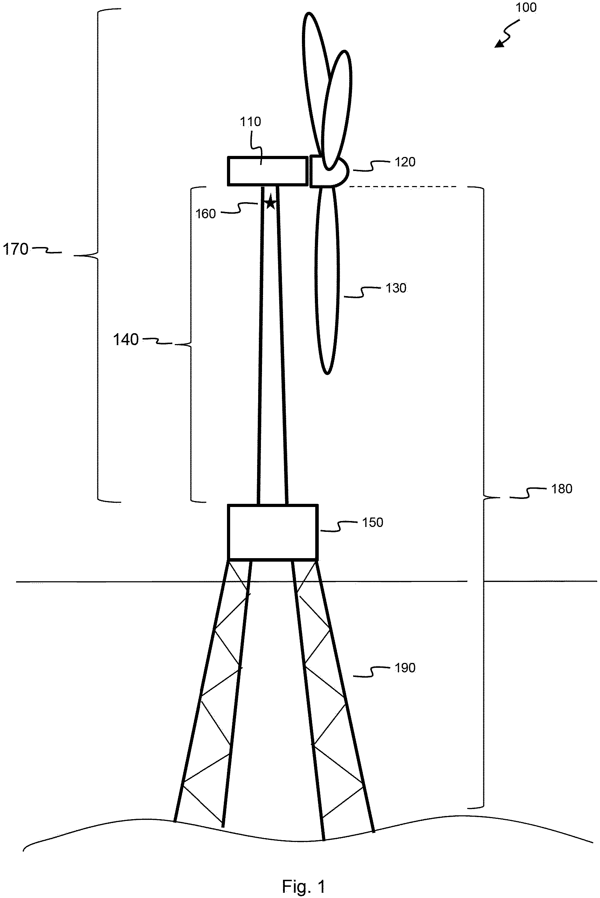

Fig. 1 illustrates a wind turbine 100 of the invention, comprising a nacelle 110 with a rotor hub 120 and blades 130, the nacelle 110 is supported by a wind turbine support structure 180 or tower 180. The nacelle 110 may comprise a gearbox, and comprises an electric generator. The wind turbine support structure 180 may comprise the shaft or the wind turbine tower 140, and may stand on a transition piece 150 that may rest on a foundation 190. The foundation 190 anchors the wind turbine 100 at the bottom of the sea and is depicted as a multi-pile structure. A possible location for an oscillation sensor 160 is represented by an asterisk.

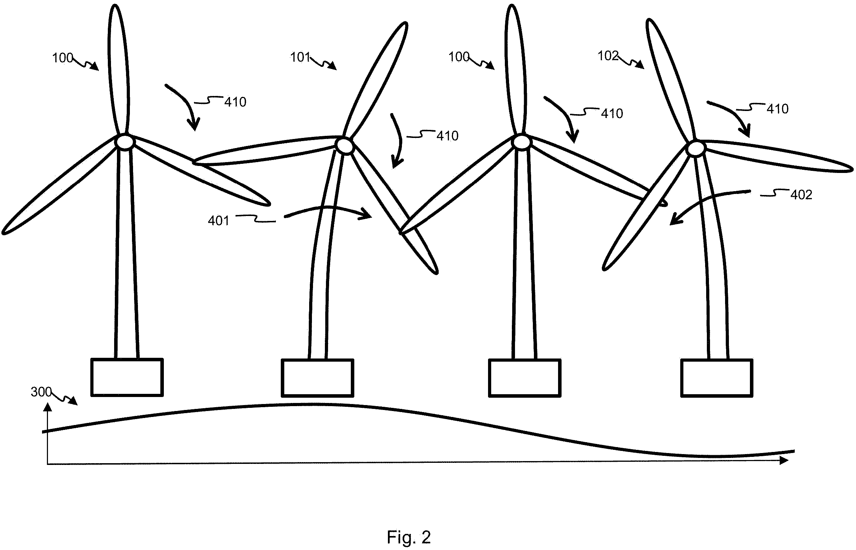

Fig. 2 illustrates an oscillating wind turbine 100 that oscillates from side-to-side. The illustration shows 4 different phases of the same wind turbine while oscillating (100 → 101 → 100 → 102). 100 shows the phase where the tower is not flexed, 101 shows the phase where the tower is flexed in a first direction indicated by the direction of the arrow 401, where 102 shows the phase where the tower is flexed in a second direction indicated by the direction of the arrow 402. An arrow 410 indicates the direction of the rotation of the rotor. The graph 300 below the drawing illustrates the impact of the oscillation movement phase of the tower on the power output of the wind tower turbine; in the phase of the oscillation where the tower flexes forwards, the captured wind force is largest producing therefore the highest power.

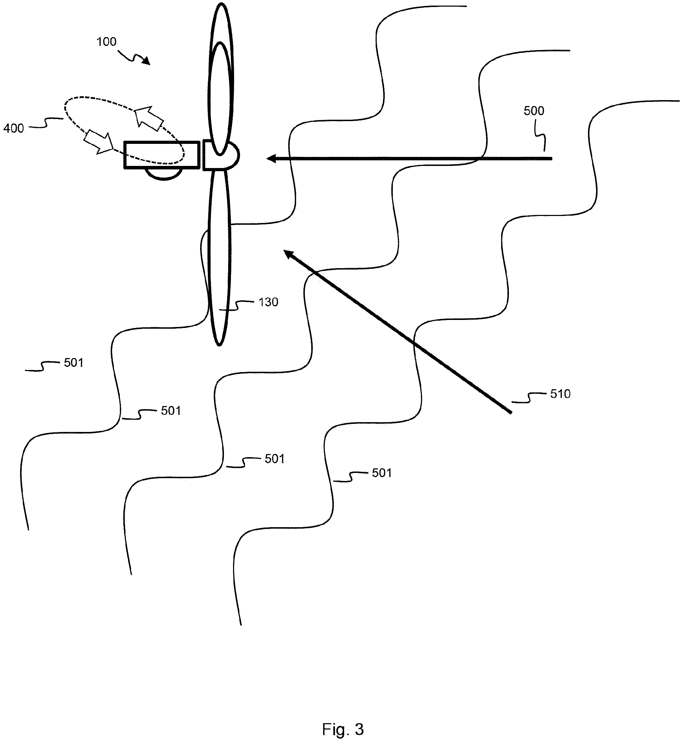

Fig. 3 shows a birds eye view of a wind turbine 100 installed at sea, and that is subjected to a sea-wave induced force 510 whereby the direction of the arrow indicated the direction of the force caused by the sea-waves 501. The wind turbine 100 is also subjected to a wind-induced force 500. The rotor blades 130 typically are oriented perpendicular to the indicated direction of the wind 500. The resulting oscillation of the tower may result in a complex composite movement indicated as 400.

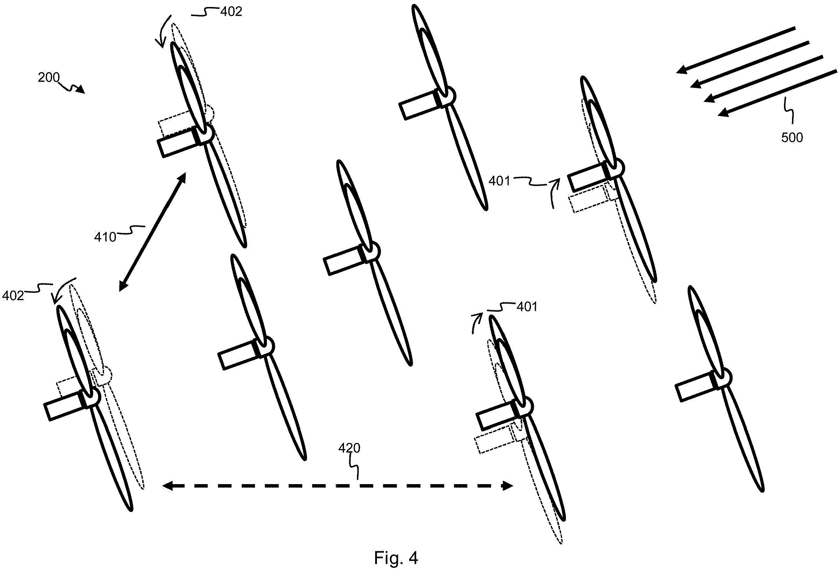

Fig. 4 shows a birds eye view of a fleet 200 of wind turbines. The wind turbines are aligned towards the direction of the wind 500. Some of the towers show an oscillating movement in a first direction 402, and some of the towers show a similar oscillating movement in a second direction 401 opposite the first direction. The method of the invention identifies the correspondence between these oscillations, such as for instance the oscillations which are in phase of each other 410, or out-of-phase of each other 420. The correspondences between two towers are represented by a double arrow 410 and 420.

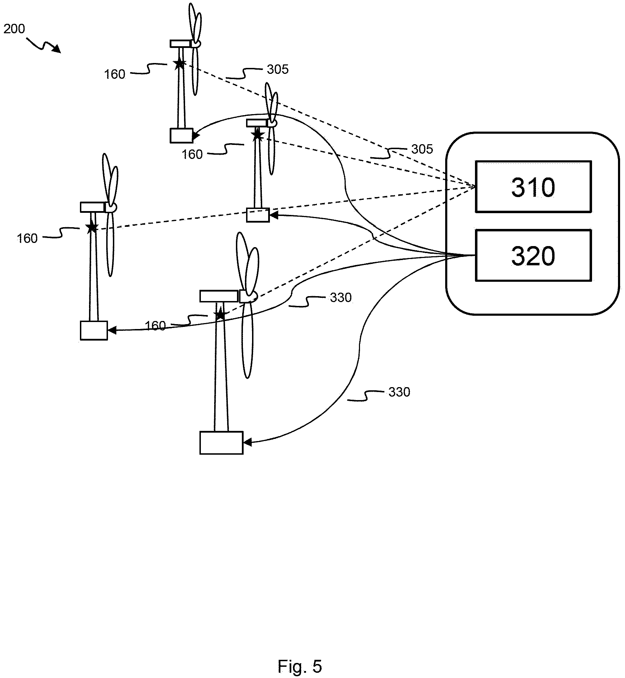

Fig. 5 show a schematic overview of the system of the invention, wherein a fleet 200 of wind turbine towers are equipped with an ATD system. All towers have a means for measuring oscillations of the towers 160. The oscillation data 305 are passed onto a module 310 for calculating the setpoints of the respective wind turbines. An interface 320 updates the calculated setpoints 330 of each tower.

In a first step of the method and in a preferred embodiment, the oscillations of all individual towers are measured indirectly by means of analysis of the produced power pattern by each individual tower. When a wind tower turbine oscillates, the generator accelerates and decelerates in phase with the tower oscillations, and consequently produces more or less power in a cycle that is in phase with the tower oscillations. These variations can easily be measured. The advantage of this measurement technique is that only the relevant direction component of the oscillation is measured, namely the direction component that impacts the power instability (as opposed to other oscillation components that may not have a significant impact on variations in the power signal), which is at the same time the direction component on which the damping technique can operate.

In another embodiment, and in a first step of the method may the oscillations of all individual wind turbines be measured by means of direct measurement of the oscillations by sensors or detectors 160. In this case, for instance accelerometers or gyroscopes may be fixedly installed in the tower for readout of the oscillation data. The oscillation data 305 may have to be separated into its directional components, for instance an X-component in the wind direction and a Y-component perpendicular to the wind direction, and are passed to a calculation module 310.

Next, the oscillation parameters of the different towers may be used in the calculation module 310 to calculate new setpoints for each wind tower turbine by comparison, filtering, through other mathematical operations, or by artificial intelligence techniques such that certain correspondences are identified between the oscillations of certain towers. In case that certain correspondences are identified further method steps can act upon these to determine an optimization of the setpoints. The calculation module 310 may be embodied as a computer system, a programmable module, an electronics module, a cloud based module or alike.

In a preferred and least complex embodiment, the correspondence that may be identified is where the directional components of the oscillation of two oscillating wind turbines are out of phase. In this case, and in a next step of the method the setpoint values are updated to a maximal setpoint such that when applying identical but maximal setpoints to these two towers will result in a maximal damping of these two wind turbines. This will result in the advantageous effect of a maximal lifetime saving through maximal damping of the oscillations. Although that setting the setpoints to a maximal value leads to a high damping induced instability in the produced power of the two wind turbines, these instabilities cancel each other out (because of the oscillations being out of phase) resulting in a power signal that is clear from any damping induced power instability effects.

It is clear that other embodiments can be envisaged where more then two oscillating towers are involved, such that their contributing directional components may result in similar cancelling out effects when changes to the setpoints, that determine the damping factors, are made.

In a further set of embodiments, may the directional components of the oscillations that are not in the same direction be analysed to calculate and update setpoints with an advantageous impact on the reduction of cyclic power variations of the produced power.

The calculated setpoints 330 are then updated by an interface 320 to the different towers, which may be a data communication interface or alike.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

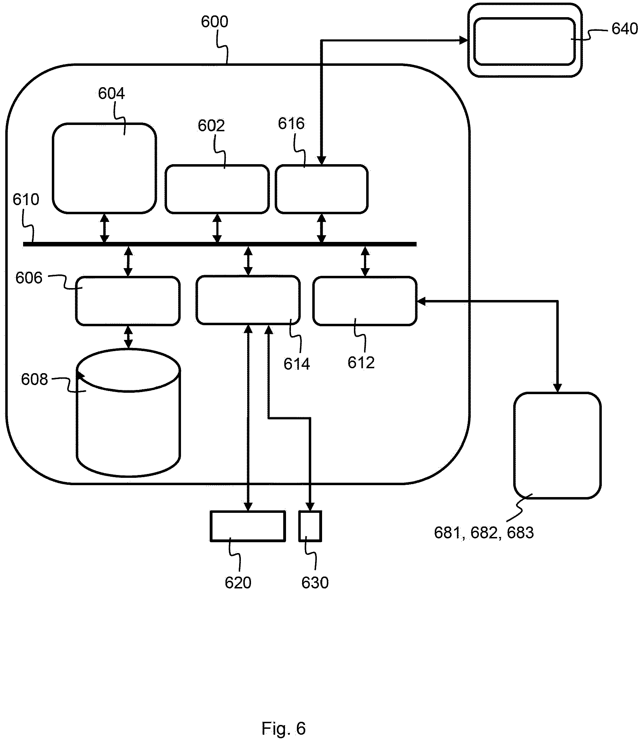

Fig. 6 shows a suitable computing system 600 enabling to implement embodiments of the method for improving blocking effect avoidance in a wireless access node according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, ... could be used.

## Claims

1. Method for reducing cyclic power variations of a fleet 200 of wind turbines 100, said fleet 200 of wind turbines 100 comprising a plurality of wind turbines 100 each equipped with an active tower damping system, ATD, to compensate tower oscillations and of which a damping factor of the ATD is adjusted according to a setpoint; the method comprising the steps of:
measuring the tower oscillations 400,
calculating and updating the setpoints of the respective wind turbines such that aggregated power variations of the wind turbines in the total power output are minimized according to differences in phase between the measured tower oscillations.

2. Method for reducing cyclic power variations of a fleet of wind turbines according to Claim 1, wherein the updating of the setpoints comprises increasing the setpoints for wind turbines having out-of-phase oscillations, and decreasing the setpoints for wind turbines having in-phase oscillations.

3. Method for reducing cyclic power variations of a fleet of wind turbines according to Claim 1, wherein said damping factor is an electrical power limit determining a counteracting turbine force against said tower oscillations.

4. Method for reducing cyclic power variations of a fleet of wind turbines according to Claim 1, wherein said damping factor is a blade pitch setting determining a counteracting turbine force against said tower oscillations.

5. Method for reducing cyclic power variations of a fleet of wind turbines according to Claim 1, the method wherein:
said calculation of said setpoints is performed by identifying a set of two or more wind turbines in said wind farm that are oscillating in opposite phase of each other in said wind direction,
and wherein said updating of said setpoints is performed by increasing the setpoints of said two or more wind turbines.

6. Method for reducing cyclic power variations of a fleet of wind turbines according to Claim 5, wherein the steps of said method are repeated until all sets of two or more wind turbines in said wind farm that are oscillating in opposite phase of each other are identified.

7. Method for reducing cyclic power variations of a fleet of wind turbines according to any of the previous claims, wherein said tower oscillations are measured by analysing the power-output of said turbine.

8. Method for reducing cyclic power variations of a fleet of wind turbines according to any of the previous claims, wherein said tower oscillations are measured by means of an accelerometer or gyroscope attached substantially close to said turbine.

9. Method for reducing cyclic power variations of a fleet of wind turbines according to Claim 1, wherein said differences in phase are measured in the direction in which the active damping occurs.

10. System for reducing cyclic power variations of a fleet of wind turbines, said fleet of wind turbines comprising a plurality of wind turbines each equipped with an active tower damping system, ATD, to compensate tower oscillations and of which a damping factor of the ATD is adjusted according to a setpoint, comprising:
- a means for measuring said tower oscillations,
- a module for calculating the setpoints of the respective wind turbines such that aggregated power variations of the wind turbines in the total power output are minimized according to differences in phase between the measured tower oscillations,
- an interface for updating setpoints that determine said damping factors of said wind turbines.
